# EUROPEAN PATENT APPLICATION

(11) **EP 4 506 143 A1**
(43) Date of publication of application: **12.02.2025**
(21) Application number: 24189372.6
(22) Date of filing: 18.07.2024
(51) Int. Cl.: B29C 64/118, B33Y 10/00, B33Y 70/10, B33Y 80/00, G09B 23/28

(54) **3D PRINTING FILAMENT FOR MEDICAL IMAGING HUMAN EQUIVALENT BONES WITH RADIOPAQUE THAT IS MOST SIMILAR TO HUMAN BONES**

(30) Priority: 09.08.2023 KR 20230104083
(71) Applicant: Petela Co. Ltd., Gwangju-si, Gyeonggi-do (KR)
(72) Inventor: LEE, Choong-Keun, Songpa-gu, Seoul (KR); YOON, Myung-Sung, Suwon-si, Gyeonggi-do (KR); JANG, Hui Min, Suwon-si, Gyeonggi-do (KR)
(74) Representative: Richardt Patentanwälte PartG mbB

(57) **Abstract**

The present invention relates to a 3D printing filament for medical imaging educational human equivalent bones with radiopaque that is most similar to human bones, which allows stable and radiation-free computed tomography (CT) medical imaging examination and education using the computed tomography (CT) for medical images by mixing and drying barium sulfate with thermoplastic resin to obtain chips, melt-extruding, cooling and winding the obtained chips to create a filament, and manufacturing human equivalent bones through 3D printing of the wound filament.

## Description

### BACKGROUND OF THE INVENTION

### Field of the Invention

The present invention relates to a 3D printing filament for medical imaging educational human equivalent bones with radiopaque that is most similar to human bones, and more specifically, to a 3D printing filament for medical imaging educational human equivalent bones with radiopaque that is most similar to a human bone, which allows stable and radiation-free computed tomography (CT) medical imaging examination and education using the computed tomography (CT) for medical images by mixing and drying barium sulfate with thermoplastic resin to obtain chips, melt-extruding, cooling and winding the obtained chips to create a filament, and manufacturing human equivalent phantoms (such as bones, skin, fat, soft tissue) through 3D printing of the wound filament.

### Background Art

As well known, computed tomography (CT) is a medical imaging device that scans the human body based on X-rays and visualizes images based on the density differences of each tissue structure.

Anatomical structures in the human body have different densities. When exposed to X-rays, the differences in absorption and penetration due to the density variations show the linear attenuation coefficient, and the attenuation coefficient can represent CT numbers in images. The range of CT Numbers is from - 1000 to 3071. Lower CT Numbers indicate lower density materials appearing black in images, and higher CT Numbers indicate higher density appearing white in images. Furthermore, bones, which serve to protect and support internal organs, are the densest structures in the human body. Bone tissue is composed of cancellous bone (200 to 600HU) and cortical bone (600 to 1500HU), with the average CT Number of around 1000HU.

Meanwhile, with the rapid development of computed tomography (CT), the importance of diagnosis using CT has been increasing. CT is to perform examinations within a single breath-hold by reducing patient radiation dose and increasing scanning speed. For this, by using new materials in a detector, sensitivity to lower doses has been improved, thereby reducing the radiation exposure to patients and enhancing resolution.

Additionally, the diagnosis of three-dimensional lesions has become possible with two-dimensional images and three-dimensional reconstructed images, thereby increasing the utilization of CT. Thus, CT is reconstructed in a mathematical method using attenuated data passing through a subject to represent the internal structure of a section in images.

Furthermore, the acquisition of high-resolution images of bone structures and locomotor organs, such as the cardiovascular system, and the quality control of the CT have become possible. To accurately scan at one go, it is necessary to undergo examination by a skilled radiologist and radiologic technologist. However, in CT, primary radiation generated in the X-ray tube is projected onto the tissue through a collimator, which is a device that the focus of an object lens turns rays entering through a slit into parallel rays, in an optical instruments like a spectrometer. Since X-rays are continuously irradiated to the tissue while the X-ray tube rotates 360 degrees, the radiation dose is very high. Therefore, CT education and training are not feasible to apply to a real human body, so instead of the real human body, a human equivalent model must be used.

Therefore, since it is impossible to conduct CT imaging medical education by directly irradiating X-rays onto the human body, it is necessary to conduct image training using human equivalent bones that substitute for human bones. The kinds of human equivalent bones available for image training is limited, and the high cost of existing human equivalent bones presents difficulties in using the existing human equivalent bones for actual education. In addition, since there are no 3D printing filaments that satisfy CT numbers and material properties similar to human bones, it is impossible to replicate the color, texture, and similar CT number components of real human bones, so there are lots of problems in using the human equivalent phantoms for radiographic imaging education.

Additionally, since human equivalent bones capable of quantitatively measuring the image quality and the impact on radiation dose suitable for CT education and training similar to human bones have not been provided, there have been lots of limitation in CT education and training involving human equivalent phantoms.

### SUMMARY OF THE INVENTION

Accordingly, the present invention has been made to solve the above-mentioned problems occurring in the prior arts, and it is an objective of the present invention to provide a new 3D printing filament for medical imaging educational human equivalent bones with radiopaque that is most similar to human bones, which allows stable and radiation-free computed tomography (CT) medical imaging examination and education using the computed tomography (CT) for medical images by mixing and drying barium sulfate with thermoplastic resin to obtain chips, melt-extruding, cooling and winding the obtained chips to create a filament, and manufacturing human equivalent bones that meet the material properties of the CT number through 3D printing of the wound filament.

To accomplish the above object, according to the present invention, there is provided a 3D printing filament for medical imaging educational human equivalent bones with radiopaque that is most similar to human bones, which is manufactured to print human equivalent bones of a human body model, wherein the filament capable of printing human equivalent bones is formulated by mixing and drying 1 to 8 parts by weight of medical-grade barium sulfate based on 100 parts by weight of thermoplastic resin in a mixing dryer to obtain chips, melt-extruding and cooling the obtained chips in a melt extruder and cooler to produce a filament, and winding the filament.

Moreover, the filament has a diameter of 1.75 mm to 2.85 mm.

Furthermore, the thermoplastic resin is composed of any one selected from PET copolymer, PLA, ABS, PP, PE, PC Nylon, POM, and PBT resin.

According to the present invention, the 3D printing filament for medical imaging educational human equivalent bones with radiopaque that is most similar to human bones has a new effect of allowing stable and radiation-free computed tomography (CT) medical imaging examination and education using the computed tomography (CT) for medical images by mixing and drying barium sulfate with thermoplastic resin to obtain chips, melt-extruding, cooling and winding the obtained chips to create a filament, and manufacturing human equivalent bones through 3D printing of the wound filament.

### BRIEF DESCRIPTION OF THE DRAWINGS

FIGS. 1 and 2 are photographs showing an embodiment according to the present invention.

FIGS. 3 to 8 are photographs showing experimental examples according to the present invention.

### DETAILED DESCRIPTION OF THE PREFERRED EMBODIMENT

To fully understand the present invention, preferred embodiments of the present invention are described with reference to the accompanying drawings.

The embodiments of the present invention can be varied in many forms, and the scope of the present invention should not be construed as being limited to the embodiments specifically described below. The embodiments are provided to more safely describe the present invention to a person having ordinary skill in the art.

Therefore, the shapes of components in the drawings may be exaggerated for clearer description. The same members in each drawing are indicated by the same reference numerals.

A 3D printing filament 202 for medical imaging educational human equivalent bones 102 according to the present invention will be described below with reference to an embodiment and experimental examples 1 and 2.

### [Embodiment]

The present invention is configured to manufacture a filament 202 for 3D printing of medical imaging educational human equivalent bones 102.

The filament 202 capable of printing human equivalent bones 102 is formulated by mixing and drying 1 to 8 parts by weight of medical-grade barium sulfate based on 100 parts by weight of thermoplastic resin 106 in a mixing dryer 204 to print human equivalent bones 102 with various specific gravities.

A mixture in which 1 to 8 parts by weight of medical-grade barium sulfate is mixed into 100 parts by weight of thermoplastic resin 106 is introduced into the mixing dryer 204, and then, is mixed and dried at 45 to 57°C for 20 to 32 minutes. Chips 206 obtained in the mixing/drying process are introduced into a melt extruder 208 and cooler 210, in which the chips are melt extruded, cooled, and wound to produce a filament 202. Thereafter, the filament 202 are wound to 300M (1 roll) standards to print bones.

Furthermore, it is preferable for the filament to have a diameter of 1.75 mm to 2.85 mm.

Additionally, the thermoplastic resin 106 is preferably composed of any one selected from PET copolymer, PLA, ABS, PP, PE, PC Nylon, POM, and PBT resin.

Meanwhile, the human body is composed of a total of 206 bones, and human bones can be largely divided into seven skeletal parts according to the difference in bone density: skull, temporomandibular joint, shoulder joint, rib, elbow joint, hip joint, and femur.

Moreover, the internal structure of human bones mainly consists of joints, cartilage connecting the joints, periosteum with high density covering the bone surface, and the softer bone sponge inside the bone.

To print a human equivalent bone simulator of the same level as a real human bone by a 3D printer 212, it is necessary to use the three components, namely, cartilage, periosteum, and bone sponge, as described above.

Specifically, since the seven skeletal parts of the human body, namely, the skull, temporomandibular joint, shoulder joint, rib, elbow joint, hip joint, and femur, are different in strength, in the present invention, filaments 202 with different specific gravities are produced, so that filaments 202 with density and specific gravity suitable for the density and specific gravity of each skeletal part can be selected and output. For instance, for the relatively rigid skull, the part by weight of barium sulfate (MBaSO4) is increased, and the part by weight of PET copolymer is decreased, so that the specific gravity of bone can range from 1.78 to 1.89.

Additionally, in CT imaging, each pixel is represented by a CT number (HU), and according to the CT number (HU), the 3D printer 212 can manufacture human equivalent phantoms using the filament.

All resins, metals, and non-metals have shielding properties, and the shielding degree (CT number) thereof varies. The most important property of the 3D printing filament 202 is 3D printing processability.

Therefore, in manufacturing the 3D printing filament 202 for medical imaging educational human equivalent bones according to the present invention, the selection of resin, metal, and non-metal materials with excellent 3D printing processability is important, and the mixability of resin, metal, and non-metal materials is also important.

Barium sulfate is a non-metal powder with relatively low density, and has excellent dispersibility when mixed with thermoplastic resin. The filament 202 produced by melt-extrusion of the barium sulfate mixture also exhibited excellent processability in 3D printing.

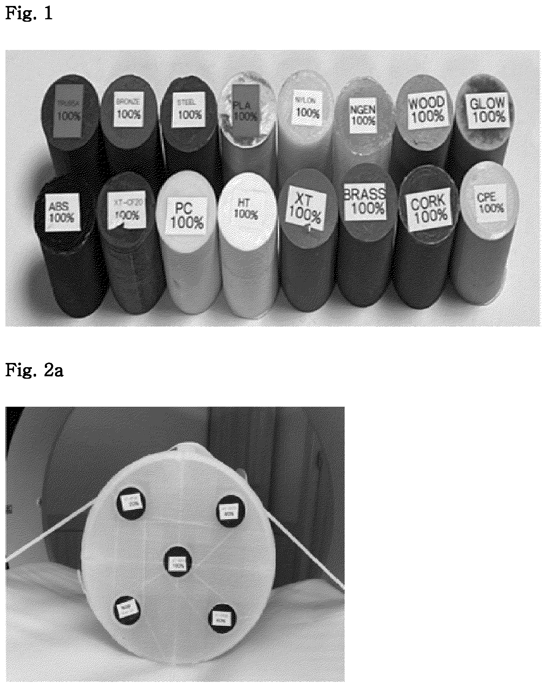

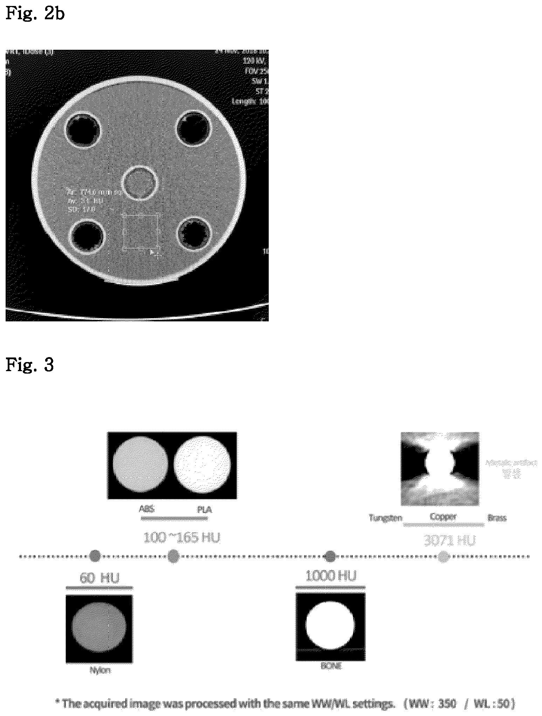

FIGS. 1 and 2 represent an experiment to obtain the CT Number using a cylindrical specimen (PIN, Ø20×50mm).

### [Experimental Example 1]

PET copolymer, PLA resin, PET resin, PBT resin, ABS, Nylon, PC, PE, PP, and POM were prepared, and printed using an FDM type 3D printer 212. The 3D printer 212 used was PRUSA MK3S (Czech PRUSA).

In CT imaging, each pixel were represented by CT number (HU), and a series of counting values for each pixel were measured.

**[Table 1]**

| Type of Resin | CT Number (HU) | Type of Resin | CT Number (HU) |
|---|---|---|---|
| PETELA-M.Premium | 60 | Nylon (M.C) | 106 |
| PETELA-M.GE | 102 | POM | 325 |
| PETELA-M.EP | 20 | PEI | 156 |
| PETELA-M.IPS | 60 | PET | 310 |
| PETELA-M.IPS+ | 60 | PP | -127 |
| PLA resin | 200 | PE | -78 |
| ABS | -46 | PC | 88 |

In experimental example 1, based on resin weight values of F100%(Wt), a cylindrical specimen (PIN, Ø20×50mm) was manufactured using the FDM type 3D printer, and an experiment was conducted to obtain CT Number values, and deviations for each item were indicated.

To identify the CT Number for each material, cylinders of the materials were created and inserted into circular CT imaging plastic grooves. When conducting CT imaging, the shape as seen in the right image could be obtain, and the CT Number for each shape could be indicated.

In addition, a comparison of metal and non-metal shielding properties is shown in Table 2.

**[Table 2]**

| Type | CT number (HU) | Type of Resin | CT number (HU) |
|---|---|---|---|
| steel Fill | >3071 | bismuthFill | >3071 |
| bronzeFill | >3071 | BaSO4Fill | >3071 |
| brassFill | >3071 | woodFill | 15 |
| copperFill | >3071 | corkFill | 123 |

In case that the CT numbers of pure 100% metal materials (MaterialsFill) are higher than 3071HU, blurring is so severe that the image cannot be read, as shown in the CT image results below.

The comparison of resin shielding properties is shown in Table 3.

**[Table 3]**

| Type of Resin | CT number (HU) | Type of Resin | CT number (HU) |
|---|---|---|---|
| PLA | 170 | Nylon | 60 |
| ABS | 120 | POM | 325 |
| PC | 88 | PBT | 118 |
| PP | -127 | PET | 310 |
| PE | -78 | PE I | 156 |

Moreover, a comparison of shielding properties (CT Number) of metals, non-metals, and plastic resins is shown in FIG. 3.

As shown in FIG. 3, In case that the CT numbers of metal materials are higher than 3071HU, blurring is so severe that the image cannot be read since the shielding properties are so significant. However, the shielding properties (CT Number) of plastic resins of less than 2000HU can be displayed clearly in white, thereby allowing for the capturing of clear CT images and enabling interpretation.

[Experimental Example 2]

**[Table 4]**

| Type of Resin | Experimental Example (8 times) | | | | | | | |
|---|---|---|---|---|---|---|---|---|
| | 1 | 2 | 3 | 4 | 5 | 6 | 7 | 8 |
| PLA(170 HU) | **89** | **88** | **87** | **86** | **85** | **84** | **83** | **82** |
| TPS | 10 | 10 | 10 | 10 | 10 | 10 | 10 | 10 |
| Barium Sulfate | **1** | **2** | **3** | **4** | **5** | **6** | **7** | **8** |
| CT number (HU) | 210 | 460 | 670 | 920 | 1160 | 1320 | 1490 | 2050 |
| Printing | Good | Good | Good | Good | Good | Good | Good | Good |

| | | | | | | | | |
|---|---|---|---|---|---|---|---|---|
| (Unit: Weight %) | | | | | | | | |

In experimental example 2, as shown in [Table 4], experimental examples 1 to 8 were conducted. The filament was processed by varying the weights of poly-lactic acid (PLA) resin and barium sulfate, fixing thermoplastic composite (TPS composite by PETELA) resin at 10%, and mixing them to a total weight value of 100% (Wt). The filament 202 was printed by the FDM type 3D printer 212 in 100% infill to produce a cylindrical specimen (PIN, Ø20×50mm). Thereafter, an experiment was conducted to obtain CT Number values, deviations for each item were displayed.

The CT numbers for the amount of barium sulfate ranged from 200 to 2000HU, which were compatible with both cancellous bone (200 to 600HU) and cortical bone (600 to 1500HU) in CT resolution, and it was found that the printing processability was good.

**[Table 5]**

| Type of Resin | Experimental Example (6 times) | | | | | | | |
|---|---|---|---|---|---|---|---|---|
| | 1 | 2 | 3 | 4 | 5 | 6 | 7 | 8 |
| PETELA M | 99 | 98 | 97 | 96 | 95 | 94 | 93 | 92 |
| Barium Sulfate | 1 | 2 | 3 | 4 | 5 | 6 | 7 | 8 |
| CT number (HU) | 360 | 570 | 860 | 1109 | 1200 | 1350 | 1580 | 1980 |
| Printing | Good | Good | Good | Good | Good | Good | Good | Good |

| | | | | | | | | |
|---|---|---|---|---|---|---|---|---|
| (Unit: Weight %) | | | | | | | | |

In experimental example 2, as shown in [Table 5], experimental examples 1 to 8 were conducted.

Resin processing using an injector or an extruder does not require resin modification for improvement of resin processability due to the excellent processability of the injector or the extruder. However, by using the filament 202 processed by mixing the mixture 100 to a total weight value of 100%(Wt) while varying the weights of PP and barium sulfate, a cylindrical specimen (PIN, Ø20×50mm) was produced by the FDM type 3D printer 212 in 100% infill, and then, an experiment requiring CT number values was conducted, and deviations for each item were displayed.

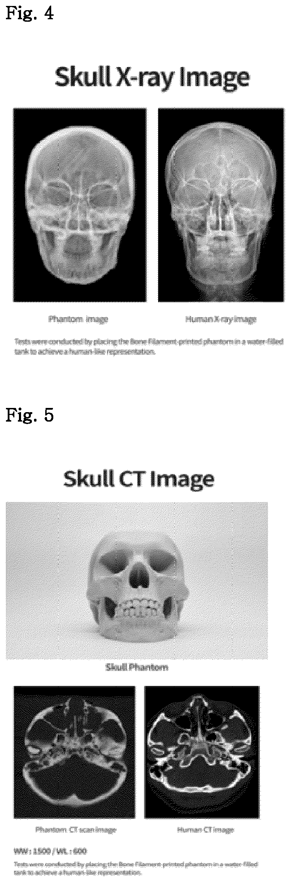

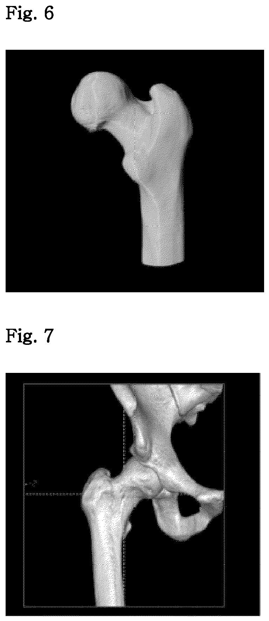

Additionally, as shown in experimental example 2 [Table 5], by using the filament 202 processed by mixing the mixture 100 with total weight value of 100%(Wt), in which 96 weight% of PETELA IPS resin, which was a composition of PBT and PET, and 4 weight% of barium sulfate were mixed, a model of an artificial bone 102 (Phantom) most similar to the human bone was printed by the FDM type 3D printer 212 (100% infill & CT Number 1000HU). The model is illustrated in FIGS. 4 to 7.

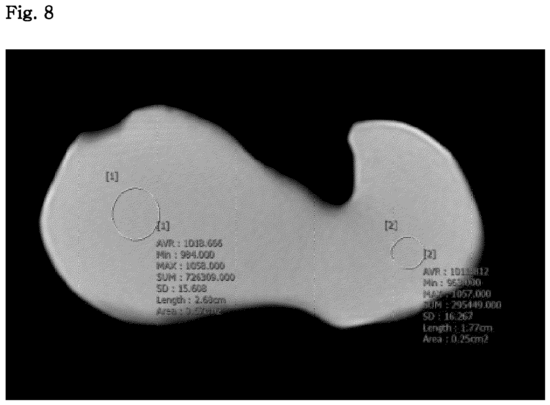

FIG. 8 shows the CT imaging of a model (Phantom of Human) of a human femur, which is an artificial bone most similar to the X-ray linear attenuation coefficient of the real human bone in specific cross-sectional parts 1) and 2), thus satisfying the average value of CT Number 1000HU completely.

As seen in FIGS. 4 to 8, the human equivalent bones show similar CT clarity to human bones, thus satisfying the material with a similar CT number to human bones. Therefore, the human equivalent bones 102 allow for stable and radiation-free computed tomography (CT) medical imaging examination and education.

The embodiments of the present invention described above are merely illustrative, and those skilled in the art will recognize that various modifications and equivalents are possible from the embodiments. Therefore, the present invention should not be limited to the forms mentioned in the detailed description.

Therefore, the true technical scope of protection of the present invention should be determined by the technical spirit of the attached claims. Furthermore, the present invention should be understood to include all modifications, equivalents, and substitutes within the spirit and scope of the invention as defined by the attached claims.

### Reference Signs List:

| | |
|---|---|
| 100 | mixture |
| 102 | human equivalent bones |
| 104 | human body model |
| 106 | thermoplastic resin |
| 200 | method |
| 202 | 3D printing filament |
| 204 | mixing dryer |
| 206 | chips |
| 208 | melt extruder |
| 210 | cooler |
| 212 | 3D printer |
| 300 | medical imaging scanner |
| 302 | image data |
| 400 | image acquisition system |

## Claims

1. A mixture (100) for printing human equivalent bones (102) of a human body model (104), the mixture (100) comprising 1 to 8 parts by weight of medical-grade barium sulfate based on 100 parts by weight of thermoplastic resin (106).

2. The mixture (100) according to claim 1, wherein the thermoplastic resin (106) is composed of any one selected from the group consisting of PET copolymer, PLA, ABS, PP, PE, PC Nylon, POM, and PBT resin.

3. The mixture (100) according to claims 1 or 2, wherein the mixture (100) is processed by mixing 82 to 89 parts by weight of poly-lactic acid (PLA) and 1 to 8 parts by weight of barium sulfate based on 10 parts by weight of thermoplastic composite, TPS composite, resin (106).

4. A method (200) for printing human equivalent bones (102) of a human body model (104), the method (200) comprising a manufacturing of a 3D printing filament (202) capable of printing human equivalent bones (102), wherein the 3D printing filament (202) is composed of a mixture (100) according to any of the preceding claims, the manufacturing of the 3D printing filament (202) comprising:
- mixing and drying the mixture in a mixing dryer (204) to obtain chips (206);
- melt-extruding the obtained chips (206) in a melt-extruder (208); and
- cooling the obtained chips (206) in a cooler (210), resulting in the 3D printing filament (202).

5. The method (200) according to claim 4, further comprising a winding of the 3D printing filament (202).

6. The method (200) according to claims 4 or 5, wherein the 3D printing filament (202) has a diameter between 1.75 mm and 2.85 mm.

7. The method (200) according to any of the preceding claims, further comprising an outputting of the 3D printing filament (202) by a 3D printer (212) to print the human equivalent bones (102).

8. The method (200) according to any of the preceding claims, wherein the 3D printer (212) is an FDM type 3D printer, and the outputting of the 3D printing filament (202) is performed in 100% infill to print the human equivalent bones (102).

9. The method (200) according to any of the preceding claims, wherein the human equivalent bones (102) are radiopaque human equivalent bones.

10. The method (200) according to any of the preceding claims, further comprising a scanning of the human equivalent bones (102) by a medical imaging scanner (300), resulting in image data (302).

11. The method (200) according to any of the preceding claims, further comprising the use of the image data (302) as training images.

12. An image acquisition system (400) for medical imaging scans, the image acquisition system (400) comprising a 3D printer (212) configured to execute the method (200) according to any of the preceding claims, human equivalent bones (102) of a human body model (104), and a medical imaging scanner (300).

13. The image acquisition system (400) according to claim 12, wherein the 3D printer (212) is an FDM type 3D printer.

14. The image acquisition system (400) according to claims 12 or 13, wherein the medical imaging scanner (300) is a CT scanner.
